Europäisches Patentamt

European Patent Office

Office européen des brevets

(19)

(11) **EP 0 915 582 A1**

(12) **EUROPEAN PATENT APPLICATION**

(43) Date of publication:
**12.05.1999 Bulletin 1999/19**

(51) Int Cl.⁶: **H04J 11/00**, H04L 23/02

(21) Application number: **98402669.0**

(22) Date of filing: **27.10.1998**

| | |
|---|---|
| (84) Designated Contracting States: **AT BE CH CY DE DK ES FI FR GB GR IE IT LI LU MC NL PT SE** Designated Extension States: **AL LT LV MK RO SI** | (72) Inventors: • **Le Dantec, Claude** **35140 Saint Hilaire des Landes (FR)** • **Piret, Philippe** **35510 Cesson-Sevigne (FR)** |
| (30) Priority: **04.11.1997 FR 9713828** | (74) Representative: **Rinuy, Santarelli** **14, avenue de la Grande Armée,** **B.P. 237** |
| (71) Applicant: **CANON KABUSHIKI KAISHA** **Tokyo (JP)** | **75822 Paris Cédex 17 (FR)** |

(54) **Symbol coding device and method, symbol decoding device and method**

(57)     The information symbol coding device provides code words to amplitude modulate, in proportional, a physical quantity on a transmission channel, the said physical quantity being capable of taking a finite number $s \geq 3$ of different non-zero values,

It has:

- an input for information symbols referred to as "to be transmitted",
- processing means adapted to associate, with information symbols to be transmitted, at least one row of an orthogonal matrix, the successive elements of this row specifying the successive symbols of a code word associated with the said information symbols to be transmitted, the said orthogonal matrix having elements taking their value from a finite set of $n$ different non-zero values, $n$ being $\geq 3$ and $\leq s$, and
- a code word symbol output.

Fig. 1

## Description

The present invention relates to a symbol coding device and method and a symbol decoding device and method.

Direct sequence spread spectrum, known to persons skilled in the art by the name DSSS, is a data transmission method in which the bandwidth used is wider than that required by the information rate. Instead of the transmission of an information symbol every $T$ seconds (situation "1"), here a symbol is transmitted every $T/n$ seconds with the additional constraint that in the set of n symbols transmitted between the instants $iT$ and $(i+1).T$ ($i$ being integer), the first symbols transmitted greatly reduce the possible values of the later symbols transmitted (situation "2").

Each sequence of $n$ "short" symbols which replace a single "long" symbol (or a fairly short sequence of long symbols) is referred to as a "spread sequence".

After modulation (amplitude, phase, or quadrature amplitude) of a carrier, the resulting power spectrum is different between situations 1 and 2, typically:

- in situation 1, the power spectrum is narrow, but has a high value in this narrow domain;
- in situation 2, the power spectrum is wider (by a factor equal to around $n$) and it has a lower value over this wide domain.

One advantage of situation 2 compared with situation 1 is that it makes the transmission more resistant to frequency-dependent noise and to the fault referred to as "fading", related to multiple path interference.

Situation 2 distributes the transmission power better as a function of the frequency. Finally, spectrum spreading is made mandatory by numerous current regulations.

When a spread sequence is received after transmission on a channel, the receiver has to estimate the corresponding information. It is known that this task is easier when the sequences transmitted are chosen from a set of sequences which are orthogonal in pairs.

$$\text{Let } U = \{u^{(i)} = (u^{(i)}_1, ..., u^{(i)}_n) \ ; \ i = 1, ..., m\} \tag{1}$$

a set of $m$ sequences $u^{(i)}$ of complex numbers $u^{(i)}_k$. Let $\underline{u}^{(i)}_k$ be the complex number, the conjugate of $u^{(i)}_k$. Let a scalar product be defined by :

$$<u^{(i)}, u^{(j)}> = \Sigma_{k=1}^{n} u^{(i)}_k \underline{u}^{(j)}_k$$

and let it be assumed that $U$ is such that $< u^{(i)}, u^{(j)}>$ is equal to 0 for $i$ different from $j$ and equal to a non-zero value for $i = j$.

Let also $v=(v_1,...,v_n)$ be the sequence received after transmission of a sequence of $U$. A " reasonable " and often optimum way of deciding which sequence of U has produced $v$ is to calculate $< u^{(i)}, v>$ for each value of $i$, and to consider $v$ as being that sequence $u^{(i)}$ for which the scalar product $< u^{(i)}, v>$ is a maximum.

It should be mentioned here that, according to the orthogonality constraint expressed above, the number $m$ of sequences $u^{(i)}$ in $U$ is at most equal to their length $n$.

When a binary alphabet channel is used, it is usual to specify it by $A(2) = \{-1, +1\}$ and to associate, for example, the logic symbol "0" with the channel symbol "$+1$" and the logic symbol " 1 " with the channel symbol "$-1$". With this viewpoint, the concern is to find a matrix $H$, with $n$ rows and $n$ columns, whose elements are in $A(2)$, and which satisfies the equation :

$$H.H^T = nI_n,$$

an equation in which $H^T$ is the transpose of $H$ and
$I_n$ is the identity matrix with $n$ rows and $n$ columns.

Such a matrix on $A(2)$ is commonly referred to as a Hadamard matrix and it is known that it can exist only if $n$ is equal to 1, 2 or a multiple of 4.

The document EP-A-94.400.936.4 (K. Saito et al.) describes a spectrum spreading method using similar matrices.

A binary alphabet is however too limited for certain applications. In particular a channel using 64-state quadrature amplitude modulation has natural alphabets with 8 or 64 elements, depending on whether the phase and phase quadrature components are considered separately or not.

The document EP-A-94.400.936.4 also describes a way of using orthogonal or nearly orthogonal matrices to transmit, on the transmission channel, signals capable of taking a number $M$ of different values such as, for example, $M = 8$ or $M = 64$. However, in order to really use all these different signal levels, it is necessary that the quantity of information to be transmitted in $T$ seconds is sufficiently high. This is because, if, for example, this quantity of information is only 1 bit per $T$ seconds, the method described in this document does not make it possible to take advantage of the freedom the user has to transmit by means of an alphabet having a number of letters strictly greater than 2.

Furthermore, according to this method, certain states, corresponding to the lowest energy levels, are used more commonly than the others, corresponding to higher energy levels, which can have drawbacks in terms of the ratio between the maximum instantaneous power and the minimum value of the square of the norm of the difference between different transmittable sequences, this ratio influencing the capability of discriminating, at reception, between different sequences, for a given signal/noise ratio.

The present invention aims to make use of an alphabet having more than 2 symbols and, in particular, a natural channel alphabet which is not $A(2)$ but the alphabet:

$$A(8) = \{-7,-5,-3,-1,+1,+3,+5,+7\}$$

In this respect, the invention aims to propose specific sets of $n$ sequences of length $n$ on $A(8)$, $h^{(i)}=(h_1^{(i)}, h_2^{(i)},.., h_n^{(i)})$ with $i = 1, ..., n$, in such a way that:

$$<h^{(i)}, h^{(j)}> = \Sigma_{k=1}^{n} h^{(i)}_k h^{(j)}_k$$

is equal to 0 for $i$ different from $j$ and a fixed value for $i = j$.

The invention also aims, by comparison with the document EP-A-94.400.936.4, for the number of components with a given absolute value to be reasonable in each of these sequences $h^{(i)}$, so as to really use the additional freedom given by the use of $A(8)$ instead of $A(2)$.

The present invention therefore relates, according to a first aspect, to an information symbol coding device providing code words, the symbols of which are capable of amplitude modulating, in proportion to their value, a physical quantity on a transmission channel, the said physical quantity being capable of taking a finite number $s \geq 3$ of different non-zero values, characterised in that it has:

- an input for information symbols referred to as "to be transmitted",
- processing means adapted to associate, with information symbols to be transmitted, at least one row of an orthogonal matrix, the successive elements of this row specifying the successive symbols of a code word associated with the said information symbols to be transmitted, the said orthogonal matrix having elements taking their value from a finite set of $n$ different non-zero values, $n$ being $\geq 3$ and $\leq s$, and
- a code word symbol output.

Correlatively, the present invention relates, according to a second aspect, to an information symbol coding method providing code words, the symbols of which are capable of amplitude modulating, in proportion to their value, a physical quantity on a transmission channel, the said physical quantity being capable of taking a finite number $s \geq 3$ of different non-zero values, characterised in that it includes:

- a step of inputting information symbols referred to as "to be transmitted",
- a processing step, during which, with information symbols to be transmitted, at least one row of an orthogonal matrix is associated, the successive elements of this row specifying the successive symbols of a code word associated with the said information symbols to be transmitted, the said orthogonal matrix having elements taking their value from a finite set of $n$ different non-zero values, $n$ being $\geq 3$ and $\leq s$, and
- a code word symbol outputting step.

It should be noted here that a matrix is referred to as "orthogonal" when the sum of the products of the homologous elements of two different rows is zero whatever the two different rows considered.

By virtue of these provisions, each symbol of a code word can take at least three different non-zero values, which makes it possible to use a transmission channel compatible with signals whose characteristic quantities can take more than two values.

Furthermore, this device has the advantages noted above as regards direct sequence spread spectrum: instead of the transmission of one information symbol every T seconds (situation "1"), here the sequence of symbols of the code word, that is to say of the row of the orthogonal matrix associated with the information symbol, is transmitted, each element being transmitted for a duration of $T/n$ seconds.

The spread sequences are orthogonal, which makes it possible to use the scalar product defined above in order to rediscover the row constituting the code word: it can be decided that the row of the matrix which was used is the one which minimises the norm of the difference between the sequence received and the sequence under consideration, the said norm being the norm associated with the scalar product mentioned above.

The coding device according to the invention therefore has a wider power spectrum (by a factor equal to around $n$) and a low value over this wide domain, compared with a device not making use of spectrum spreading. The transmission is also more resistant to frequency-dependent noise and to the fault of "fading", than when spectrum spreading is not used. The transmission power is better distributed as a function of the frequency. Finally, the device according to the invention complies with many current regulations.

Finally, it gives the user a new freedom in the choice of modulation system used. This advantage is principally noticeable where the user has available a channel with more than two levels but has to transmit, per second, only a quantity of information which is insufficient to use efficiently the method described in the document EP-A-94.400.936.4. Thus, all signal levels are used even if there is little information to be transmitted.

According to particular characteristics, the said matrix corresponds to a formally orthogonal matrix, particular numerical values being assigned to its indeterminates.

By virtue of these provisions, this matrix is easy to determine.

According to preferential characteristics, for all rows of the said matrix, the sum of the squares of the elements of a row is constant.

By virtue of these provisions, it can be decided that the sequence forming a row of the matrix which was used is the one for which the scalar product with the sequence under consideration is a maximum.

According to particular characteristics:

- the processing means are adapted so that the said orthogonal matrix has elements taking eight different non-zero values, and/or
- the said orthogonal matrix has only elements belonging to the alphabet {-7, -5, -3, -1, 1, 3, 5, 7}.

By virtue of these provisions, the code word symbols correspond to symbols of a natural alphabet of a transmission channel with 8-state amplitude modulation or with quadrature amplitude modulation whose constellation has 64 states.

According to particular characteristics, the processing means are adapted so that the said matrix:

- has twice as many rows as columns, and
- is composed of two orthogonal square sub-matrices, one of which is the opposite of the other.

By virtue of these provisions, the symbols to be transmitted can be associated either with a row of a sub-matrix, or with a row composed of the opposites of the elements of the said row.

According to particular characteristics, the information items to be transmitted are $m$-ary and the processing means are adapted to associate, with a number $t^*$ of $m$-ary information items to be transmitted, two rows of an orthogonal matrix which has a number of rows greater than or equal to the square root of $m^{t^*}$.

By virtue of these provisions, when, individually, each row of the matrix does not allow coding of a number $t^*/2$ of binary information items, a pair of rows allows coding of the number $t^*$ of binary information items.

For example, if $n = 12$, $12^2 = 144$ is greater than $2^7 = 128$. Two rows of an orthogonal matrix have 12 rows therefore allowing coding of 7 binary information items, whereas one row used in isolation allows coding of only 3 binary information items. This extension can also clearly apply to more than 2 rows of the matrix.

According to particular characteristics, the coding device as briefly described above has a modulator adapted to perform a quadrature amplitude modulation, the phase quadrature components of which represent code word symbols.

By virtue of these provisions, the invention applies to coding devices making use of quadrature amplitude modulation.

The invention also relates on the one hand to a computer, characterised in that it has a coding device as briefly described above and, on the other hand, to a device for capturing a physical quantity having a sensor adapted to provide symbols to be transmitted, characterised in that it has a coding device as briefly described above.

According to a third aspect, the present invention relates to a device for decoding information symbols transmitted in the form of code words modulating a physical quantity on a transmission channel, characterised in that it has:

- an input for received word symbols,
- processing means adapted to associate, with received word symbols, a row of an orthogonal matrix, that is to say one of which the sum of the products of the homologous elements of two different rows is zero whatever the two different rows considered, the said orthogonal matrix having elements taking at least three different non-zero values, the index of each row defining the successive transmitted information symbols associated with the said received word symbols, and
- an output for transmitted information symbols.

Correlatively, the present invention relates, according to a fourth aspect, to a method of decoding information symbols transmitted in the form of code words modulating a physical quantity on a transmission channel, characterised in that it includes:

- a step of inputting received word symbols,
- a processing step, during which a row of an orthogonal matrix is associated with received word symbols, the index of this row defining the successive transmitted information symbols associated with the said received word symbols, the said orthogonal matrix having elements taking at least their value from a finite set of $n$ different non-zero values, $n$ being $\geq 3$ and $\leq s$, and
- a step of outputting transmitted information symbols.

According to a first variant, in the symbol decoding device as briefly described above, the processing means are adapted:

- to sum, for each row of the said matrix, the products of the homologous symbols of the received word, on the one hand, and the elements of the said row, on the other hand, and
- to associate, with the said received word, the row for which the value of the said sum is a maximum.

According to a second variant, in the symbol decoding device as briefly described above, the processing means are adapted:

- to sum, for each row of the said matrix, the products of the homologous symbols of the received word, on the one hand, and the elements of the said row, on the other hand, and
- to associate with the said received word:

    . the index of the row for which the absolute value of the said sum is a maximum, when this sum is positive, and
    . the index of the row for which the absolute value of the said sum is a maximum, added to a predetermined value, when this sum is negative.

By virtue of each of these provisions, the decoding is easy.
Since the advantages of the decoding device and method are identical to those of the coding device and method, these advantages are not repeated here.
The invention will be better understood from a reading of the description which follows, produced with reference to the accompanying drawings in which:

- Figure 1 depicts a coding device according to the present invention,
- Figure 2 depicts an operational flow diagram of the coding device illustrated in Figure 1,
- Figure 3 depicts a decoding device according to the present invention, and
- Figures 4A and 4B depict an operational flow diagram of the decoding device illustrated in Figure 3.

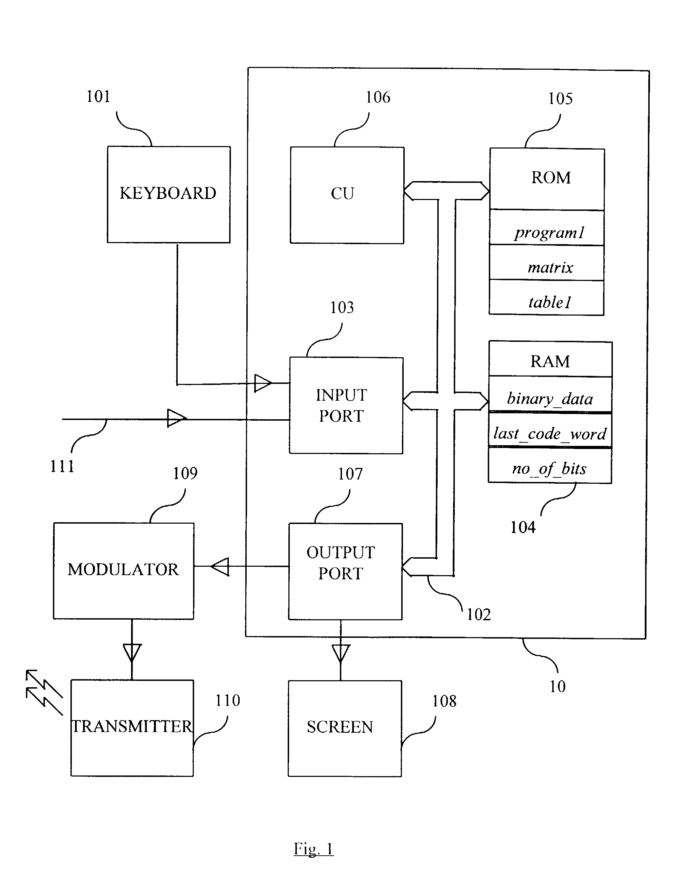

Before starting the description of the coding device illustrated in Figure 1, it is essential to describe the theoretical foundations which guarantee the quality of operation of this device.
The devices to which the invention relates make use of square matrices which are formally orthogonal. For example the matrix

$$H_4 = \begin{array}{cccc} W & X & Y & Z \\ -X & W & -Z & Y \\ -Y & Z & W & -X \\ -Z & -Y & X & W \end{array} \qquad (2)$$

satisfies the condition $H_4 . H_4{}^T = (W^2 + X^2 + Y^2 + Z^2) I_4$, whatever the values taken by the four indeterminates $W, X, Y$ and $Z$. This last equation means that the rows of $H_4$ are formally orthogonal.

For example the choice W=-7, X=-3, Y=1 and Z=5, gives:

$$H_4{}^* = \begin{array}{cccc} -7 & -3 & 1 & 5 \\ 3 & -7 & -5 & 1 \\ -1 & 5 & -7 & 3 \\ -5 & -1 & -3 & -7 \end{array} \qquad (3)$$

It should be noted here that a matrix is referred to as "formally orthogonal" when it is written with indeterminates (here W, X, Y and Z), but that as soon as a numerical value is assigned to these indeterminates, the matrix is referred to as "orthogonal".

If $H_8$ is now defined by

$$H_8 = \begin{array}{cc} H_4 & H_4 \\ H_4 & -H_4 \end{array} \qquad (4)$$

$H_8 . H_8{}^T = 2(W^2 + X^2 + Y^2 + Z^2) I_8$ is obtained, which shows that $H_8$ is also formally orthogonal.

It should be noted here that the equation (4) describes how to double the number of rows and the number of columns of an orthogonal or formally orthogonal matrix.

More generally, let $H_n$ be a matrix of dimensions $n \times n$ with elements in the cardinal number 2s set $\{+W,-W, +X,-X,+Y,-Y, ...\}$, and satisfying $H_n . H_n{}^T = (p(W)W^2 + p(X)X^2 + ...) I_n$, with $p()$ representing the number of times that a variable appears in each row of $H_n$, with an arbitrary sign.

Such a matrix $H_n$ is therefore a formally orthogonal matrix of order $n$ in s variables. For example, for $n = 12$, the matrix

$$H_{12} = \begin{array}{cccccccccccc}
W & X & Y & -X & W & Z & -Y & -Z & W & -Z & Y & -X \\
Y & W & X & W & Z & -X & -Z & W & -Y & Y & -X & -Z \\
X & Y & W & Z & -X & W & W & -Y & -Z & -X & -Z & Y \\
X & -W & -Z & W & X & Y & -Z & -X & Y & Y & -W & Z \\
-W & -Z & X & Y & W & X & -X & Y & -Z & -W & Z & Y \\
-Z & X & -W & X & Y & W & Y & -Z & -X & Z & Y & -W \\
Y & Z & -W & Z & X & -Y & W & X & Y & -X & Z & W \\
Z & -W & Y & X & -Y & Z & Y & W & X & Z & W & -X \\
-W & Y & Z & -Y & Z & X & X & Y & W & W & -X & Z \\
Z & -Y & X & -Y & W & -Z & X & -Z & -W & W & X & Y \\
-Y & X & Z & W & -Z & -Y & -Z & -W & X & Y & W & X \\
X & Z & -Y & -Z & -Y & W & -W & X & -Z & X & Y & W
\end{array}$$

(5)

is a formally orthogonal matrix of order 12 with 4 variables.

In order to be better acquainted with the theory of formally orthogonal matrices, the reader can refer to:

- the article by J. Seberry et M. Yamada, the title of which is "Hadamard matrices, sequences and block designs" from the book "Contemporary Design Theory" edited by J.H. Dimitz and D.R. Stinson, J. Wiley, in New York in 1992, or
- the book "Orthogonal Designs, Quadratic Forms and Hadamard Matrices", the authors of which are A.V. Geramita and J. Seberry, published by M. Dekker, New York, 1979.

When, for example, $W$=3, $X$=-1, $Y$=-5 and $Z$=-7 are specified, the following is obtained:

$$H_{12^*} = \begin{matrix}
3 & -1 & -5 & 1 & 3 & -7 & 5 & 7 & 3 & 7 & -5 & 1 \\
-5 & 3 & -1 & 3 & -7 & 1 & 7 & 3 & 5 & -5 & 1 & 7 \\
-1 & -5 & 3 & -7 & 1 & 3 & 3 & 5 & 7 & 1 & 7 & -5 \\
-1 & -3 & 7 & 3 & -1 & -5 & 7 & 1 & -5 & -5 & -3 & -7 \\
-3 & 7 & -1 & -5 & 3 & -1 & 1 & -5 & 7 & -3 & -7 & -5 \\
7 & -1 & -3 & -1 & -5 & 3 & -5 & 7 & 1 & -7 & -5 & -3 \\
-5 & -7 & -3 & -7 & -1 & 5 & 3 & -1 & -5 & 1 & -7 & 3 \\
-7 & -3 & -5 & -1 & 5 & -7 & -5 & 3 & -1 & -7 & 3 & 1 \\
-3 & -5 & -7 & 5 & -7 & -1 & -1 & -5 & 3 & 3 & 1 & -7 \\
-7 & 5 & -1 & 5 & 3 & 7 & -1 & 7 & -3 & 3 & -1 & -5 \\
5 & -1 & -7 & 3 & 7 & 5 & 7 & -3 & -1 & -5 & 3 & -1 \\
-1 & -7 & 5 & 7 & 5 & 3 & -3 & -1 & 7 & -1 & -5 & 3
\end{matrix}$$

$$(6)$$

which is an orthogonal matrix, all elements of which are in the alphabet $A(8)$. This matrix $H_{12}^*$ satisfies the equation $H_{12^*}.H_{12^*}^T = 252\, I_{12}$.

Of course, by identifying some of the s variables, the number of letters of $A$ can be chosen as equal to $2s^*$, for all $s^*$ greater than or equal to 1 and less than or equal to $s$. For example, $X = Z = -1$, $W = 3$, $Y = -5$ provides another matrix H12*, the first row of which is :

$$\begin{matrix} 3 & -1 & -5 & 1 & 3 & -1 & 5 & 1 & 3 & 1 & -5 & 1 \end{matrix}$$

and the corresponding alphabet $A^*$ has 6 letters : {-5, -3, -1, 1, 3, 5}.

A coding device according to the invention sends sequences of symbols corresponding to one row of an orthogonal matrix.

The particular embodiment described and depicted with reference to Figures 1 to 4B makes use of 64-state quadrature amplitude modulation, the phase and quadrature components being determined separately by making use of two identical orthogonal matrices.

In Figure 1, the coding device is illustrated in block diagram form and depicted under general reference 10 and has, interconnected by an address and data bus 102:

- a central processing unit 106 ;
- a random access memory RAM 104 ;
- a read-only memory ROM 105 ;
- an input port 103 used to receive, in the form of binary data, information which the coding device has to transmit;
- an output port 107 allowing the coding device to transmit code word symbols composed of elements of the same row of the formally orthogonal matrix made use of by the coding device;

and, independently of the bus 102:

- a modulator 109 performing a 64-state quadrature amplitude modulation (referred to as "64-QAM" or "MAQ-64" modulation) representing two symbols of two code words which come from the output port 107;
- a transmitter 110 having here a sending antenna which broadcasts a signal modulated by the modulator 109;
- a display screen 108 connected to the output port 107;
- a keyboard 101 connected to the input port 103 and providing octets representing successively used keyboard keys; and
- an input 111 of data to be transmitted, in the form of binary data, connected to the input port 103.

Each of the elements illustrated in Figure 1 is well known to persons skilled in the art of transmission systems and, more generally, information processing systems. These elements are therefore not described here.

It should be noted here that the word "register" used below designates, in each of the memories, both a memory area of small capacity (allowing storage of a small number of binary data) and a memory area of large capacity (allowing storage of an entire program).

The random access memory 104 stores data, variables and intermediate processing results, in memory registers having, in the remainder of the description, the same names as the data whose values they store. The random access memory 104 has notably:

- a register *"binary_data"* in which is stored a series of binary data items to be transmitted, a series which comes from the data to be coded input 111,
- a register *"last_code_word'* in which is stored the last code word of odd rank, and
- a register *"no_of_bits"* in which is stored the number of binary data items, or "bits", to be coded already received on the input port 103.

The read-only memory 105 is adapted to store:

- the operating program of the central processing unit 106, in a register *"program1"*,
- the formally orthogonal matrix $H_{12*}$ in a register *"matrix"*, and
- the look-up table matching binary information items received by means of the data input 111 with the index of one of the rows of the formally orthogonal matrix, in a register *"table1"*.

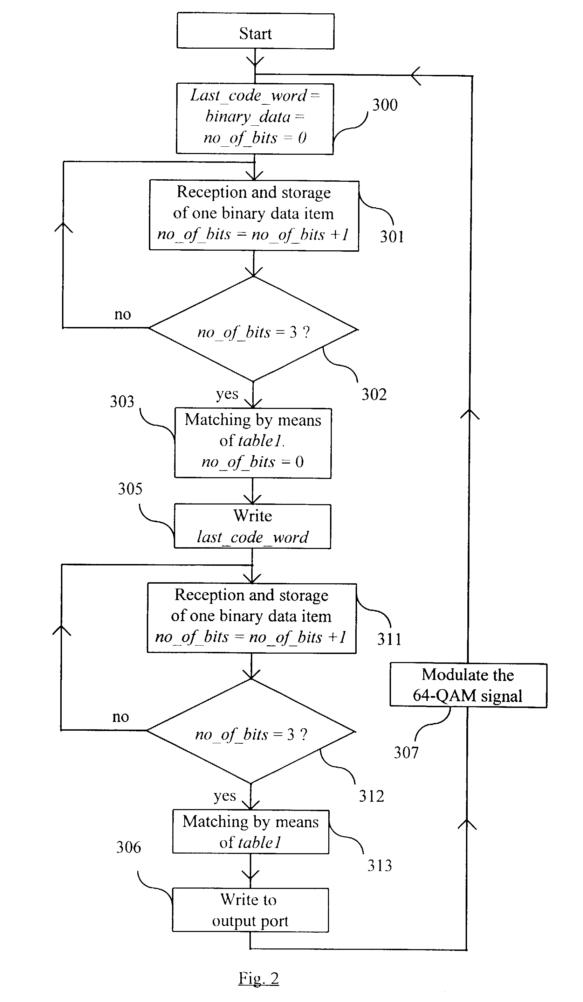

The central processing unit 106 is adapted to make use of the flow diagram described in Figure 2. In this Figure 2, it can be seen that, during the operation 300, the registers *no_of_bits, last_code_word* and *binary_data* of the random access memory 104 are initialised to the value "0". During the operation 301, the central processing unit 106 receives a binary data item on the input port 103, stores this binary data item in the register *binary_data* of the random access memory 104 and increments the register *no_of_bits* by one unit.

The test 302 determines whether or not the variable *no_of_bits* is equal to 3. When the result of the test 302 is negative, the operation 301 is reiterated. When the result of the test 302 is positive, the operation 303 consists of matching three binary data items stored in the register *binary_data* with an index of a row of the matrix $H_{12*}$, making use of the look-up table *table 1* stored in the read-only memory 105, and reinitialising the register *"no_of_bits"* to the value "0".

An example of values in such a look-up table *table1* is given below:

table 1

| binary data | matrix row index |
|:-----------:|:----------------:|
| 0 0 0 | 1 |
| 0 0 1 | 2 |
| 0 1 0 | 3 |
| 0 1 1 | 4 |
| 1 0 0 | 5 |
| 1 0 1 | 6 |
| 1 1 0 | 7 |
| 1 1 1 | 8 |

The operation 305 consists of reading, from the read-only memory 105, the row of the matrix $H_{12*}$ whose index was selected during the operation 303 and of writing the elements of this row into the register *last_code_word* of the random access memory 104. Following the operation 305, the operation 311, identical to the operation 301, is performed, then the test 312 identical to the test 302, and then the operation 313, identical to the operation 303.

Next, the operation 306 consists of reading, from the read-only memory 105, the row of the matrix $H_{12}*$ whose index was selected during the operation 313 and of writing the elements of this row to the output port 107, simultaneously with the elements of the row of the matrix $H_{12*}$ selected during the operation 303, which is stored in the register *last_code_word* of the random access memory 104.

Thus, for three binary data items read from the input port 103, a code word formed from the 12 elements of a row of the matrix $H_{12*}$ is determined by the coding device described and depicted, and for six binary data items read from the input port 103, the elements of the same rank (referred to as "homologues") of two code words are successively transmitted to the output port 107.

For example, if the binary data items read were successively:

1      1      0      1      0      0,

1     1     0 being the first triplet of binary data items read, the matrix row indices selected during successive operations 303 are " 7 " and " 5 ", that is the rows

|  |  |  |  |  |  |  |  |  |  |  |  |
|---|---|---|---|---|---|---|---|---|---|---|---|
| -5 | -7 | -3 | -7 | -1 | 5 | 3 | -1 | -5 | 1 | -7 | 3 |

and

|  |  |  |  |  |  |  |  |  |  |  |  |
|---|---|---|---|---|---|---|---|---|---|---|---|
| -3 | 7 | -1 | -5 | 3 | -1 | 1 | -5 | 7 | -3 | -7 | -5, |

and the pairs successively transmitted to the output port 107, during the operation 306, are the pairs:

| | |
|---|---|
| -5 | -3 |
| -7 | 7 |
| -3 | -1 |
| -7 | -5 |
| -1 | 3 |
| 5 | -1 |
| 3 | 1 |
| -1 | -5 |
| -5 | 7 |
| 1 | -3 |
| -7 | -7 |
| 3 | -5 |

During the operation 307, the modulator 109 performs the quadrature amplitude modulation, each amplitude representing one of the elements of the pairs successively supplied to the output port 107. For example, the phase component is proportional to the first element of these pairs and the phase quadrature component is proportional to the second element of these pairs.

The transmitter 110 performs the remote transmission of signals modulated by the modulator 109 during the operation 307. Next, the operation 300 is reiterated.

It should be noted here that it would also have been possible to use a matrix of eight rows and eight columns, since only eight different row indices are necessary to identify three binary data items. However, a spectrum spread factor greater than or equal to 10 is often imposed by regulations governing transmissions. In this case, a number of columns greater than or equal to 10 is necessary and it is practical to use a square matrix of size 12 x 12, such as the matrix $H_{12}^*$ presented above.

In general, for any number $n$ of rows of the matrix $H$, $n$ being or not being a power of 2, in order to code sequences of binary information items efficiently, $t$ is defined as being a positive integer satisfying $2^t \leq n$, and preferentially the largest integer which satisfies this equation, and it is chosen to represent each binary t-tuple by a different row of $H$.

In the example described and depicted above, with $H$ given by (6), $n$ is equal to 12, $t$ can be chosen at the value 3, and each binary triplet is then associated with a different row of $H$, and encoded in the form of this row. These values correspond to the transmission of 3 binary information items every $T$ seconds.

According to a third variant, not depicted, the following improvement is possible:

$t$ being the largest integer which makes $2^t \leq (12)^2$ true, that is 7, each of $2^7 = 128$ binary 7-tuples can be represented by means of a different pair of rows of $H$ since there are 144 such different pairs.

For example, the look-up table which associates, with 7 binary data items, one of the 128 pairs of rows of $H_{12}^*$ whose two elements are not identical, nor one of the pairs (1,2), (3,4), (5,6) or (7,8), allows this improvement to be made use of, knowing that, on the output port 107, the successive elements of the two rows whose indices were thus selected are transmitted simultaneously.

This leads to the transmission of 7 binary information items every 2T seconds, that is 3.5 binary information items every T seconds and not 3, as in the case described with reference to Figures 1 and 2.

Likewise, it will be possible for 25 binary information items to be transmitted in 7-tuple form of rows of $H_{12}^*$, since:

$$2^{25} = 33{,}554{,}432 \leq 12^7 = 35{,}831{,}808.$$

According to these improvements, each phase quadrature component no longer solely represents one row of a formally orthogonal matrix, as in the case illustrated in Figure 2, but on the contrary, the phase quadrature components jointly represent a number of rows of a formally orthogonal matrix.

A description will now be given of the decoding performed in accordance with the invention, particularly adapted here to a channel close to a theoretical channel with Additive White Gaussian Noise, better known by the initials AWGN.

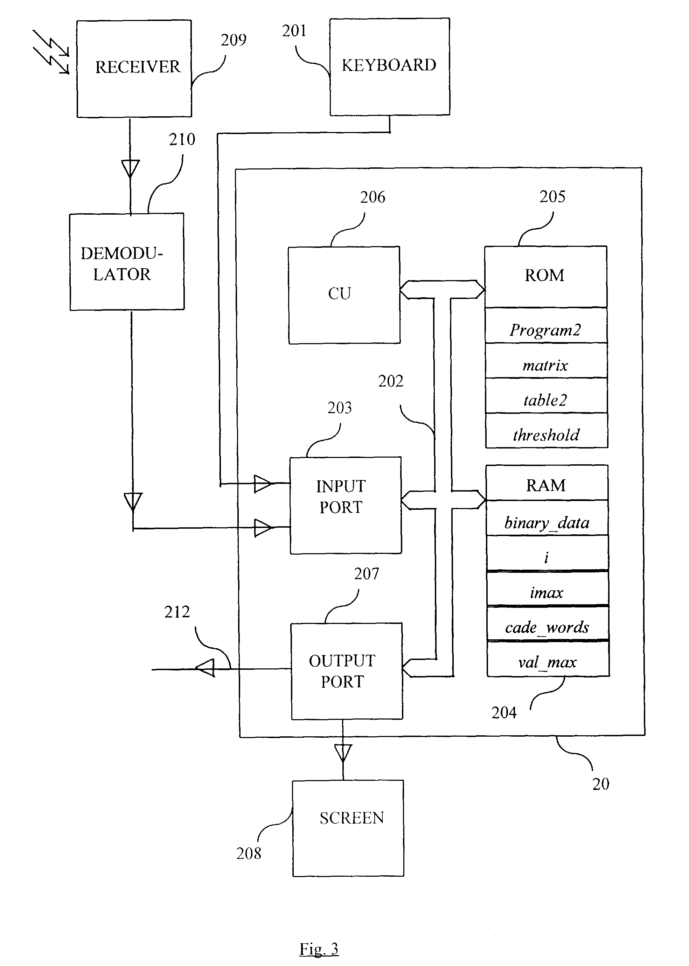

The decoding device depicted in Figure 3, under the general reference 20, is illustrated in block diagram form. It has, interconnected by an address and data bus 202:

- a central processing unit 206 ;
- a random access memory RAM 204 ;
- a read-only memory ROM 205 ;
- an input port 203 used to receive information which the decoding device has to process, store or transmit;
- an output port 207 allowing the decoding device to transmit decoded octets;

and, independently of the bus 202:

- a receiving antenna 209 which receives a signal representing the signal sent by the sending antenna 110 of a coding device (Figure 1);
- a demodulator 210, connected to the input port 203, performing a demodulation, in the form of $A(8)$ symbol pairs, of received symbols previously modulated by 64-state quadrature amplitude modulation;
- a display screen 208 connected to the output port 207;
- a keyboard 201 connected to the input port 203; and
- a decoded data output 212, connected to the output port 207.

Each of the elements illustrated in Figure 3 is well known to persons skilled in the art of information decoding systems and, more generally, information processing systems. These elements are therefore not described here.

The random access memory 204 stores data, variables and intermediate processing results, in memory registers having, in the remainder of the description, the same names as the data whose values they store. The random access memory 204 has notably:

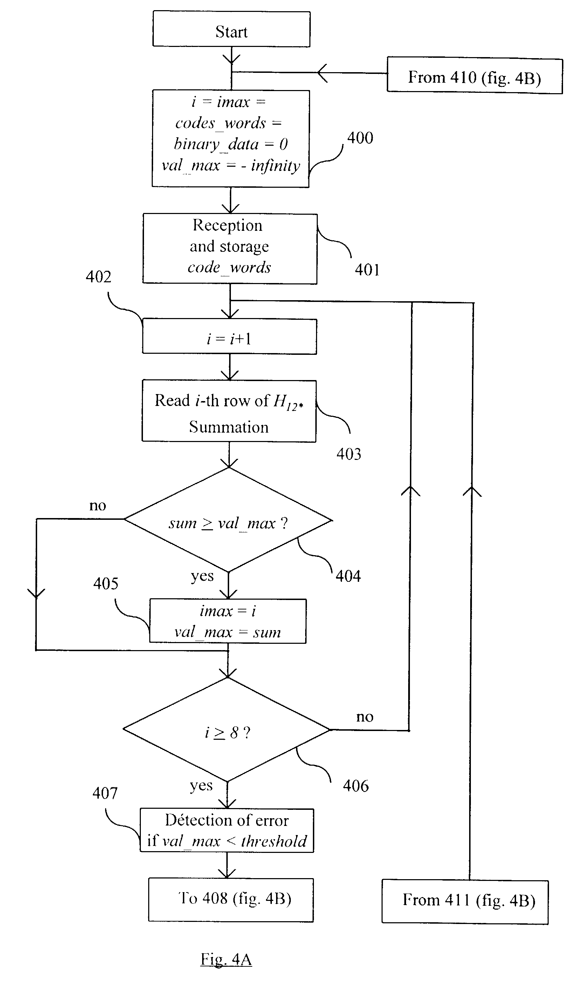

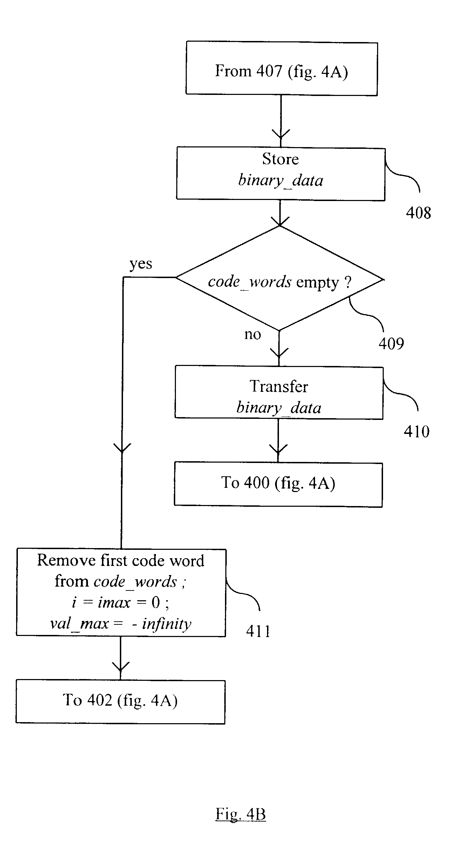

- a register *"binary_data"* in which the binary data items transmitted are stored,
- a register "*i*" in which a current row index is stored,
- a register *"imax"* in which is stored a row index corresponding to a maximum value, as described with reference to the operation 405, in Figure 4A, below,
- a register *"val_max"* in which is stored the maximum value corresponding to the index *"imax",* as described with reference to the operation 405, and
- a register *"code_words"* in which the received code words are stored.

The read-only memory 205 is adapted to store:

- the operating program of the central processing unit 206, in a register *"program2",*
- the matrix $H_{12^*}$, in the register *"matrix",*
- a threshold value in a register *"threshold",* and
- the look-up table matching the row indices with transmitted binary data, in the register *"table2":*

table2

| matrix row index | binary data |
| --- | --- |
| 1 | 0 0 0 0 |
| 2 | 0 0 1 |
| 3 | 0 1 0 |
| 4 | 0 1 1 |
| 5 | 1 0 0 |
| 6 | 1 0 1 |
| 7 | 1 1 0 |

table2   (continued)

| matrix row index | binary data |
|---|---|
| 8 | 1 1 1 |

The central processing unit 206 is adapted to make use of the flow diagram described in Figures 4A and 4B. In Figure 4A, it may be seen that, during the operation 400, the registers *i, code_words, binary_data* and *imax* are initialised to the value "0", while the register *val_max* is initialised to the value - infinity, that is to say the negative value of the highest absolute value which can be considered by the program in the process of execution.

The operation 401 consists of reading, from the input port 203, the phase and phase quadrature components transmitted by the demodulator 210 and storing them in the register *"code_words"* of the random access memory 204, forming code words having 12 elements, the values of which are in the alphabet *A(8)* : {-7, -5, -3, -1, 1, 3, 5, 7}.

More advantageously, according to a variant of the operation 401, the elements received are not all numbers of the alphabet *A(8)* but, on the contrary, can take any real values. In order to make use of this variant, the demodulator 210 provides real values representing the received signals.

The operation 402 consists of incrementing the value *i* by one unit, in the register *i*.

The operation 403 consists of reading the *i*-th row of the matrix $H_{12^*}$ stored in the register *matrix* of the read-only memory 205, and of summing the products of the homologous elements of this row and the first code word stored in the register *code_words* of the random access memory 204. This sum is, in fact, the scalar product defined above.

The test 404 consists of determining whether or not the value of the scalar product calculated during the operation 403 is greater than the value stored in the register *val_max* of the random access memory 204. When the result of the test 404 is negative, the test 406 is performed.

When the result of the test 404 is positive, the operation 405 consists of replacing the value stored in the register *imax* by the value *i,* and the value stored in the register *val_max* by the value of the scalar product calculated during the operation 403. Next, the test 406 consists of determining whether or not the value *i* is greater than or equal to 8. When the result of the test 406 is negative, the operation 402 is reiterated. When the result of the test 406 is positive, the operation 407 consists of comparing the value *val_max* and the value *threshold* and, if *val_max < threshold,* of considering that a transmission error has occurred. By way of example, the value stored in the register *threshold* is equal to "0". When a transmission error is detected in this way, this error information can be used in all suitable ways known to persons skilled in the art.

Next, the operation 408 consists of storing, in the register *binary_data,* the transmitted binary data items which correspond, through the look-up table stored in read-only memory 205, *table2,* to the row index *imax.*

The test 409 consists of determining whether or not the register *code_words* is empty. When the result of the test 409 is negative, the operation 410 consists of transferring the binary data stored in the register *binary_data* to the output port 207. Then the operation 400 is reiterated. When the result of the test 409 is positive, the operation 411 consists of removing the first code word from the register *code_words,* initialising the values of *i* and *imax* to "0" and initialising the register *val_max* to the value - infinity, that is to say the negative value of the highest absolute value which can be considered by the program in the process of execution. Next, the operation 402 is reiterated.

In accordance with the third variant of the coding device described above, the decoding device makes use of a look-up table which is the inverse of the look-up table used in the coding device. In this variant, the sum of the scalar products of the pairs taken from amongst the 128 pairs and the two simultaneously received sequences replaces the scalar product made use of in the operation 403.

According to a fourth variant, not depicted, the coding device uses a *2n* x *n* matrix:

$$H_{24^*} = -H_{12^*} \quad \begin{matrix} H_{12^*} \\ \end{matrix} \qquad\qquad (7)$$

instead of the matrix $H_{12^*}.$

In this case, two decoding methods can be used:

- either the central unit 206 uses the method described above, using all rows of the matrix $H_{24^*}$ ;
- or the central unit 206 of the decoding device makes use of an operating program slightly different from that described above : $v = (v_1,...,v_n)$ being the *n*-tuple received, the central unit 206 calculates the sequence $d^*=v.H_{12^*}^T,$

and determines î* as the index of the component of $d^*$ which has the largest absolute value : when $d_{i^*}$ is greater than zero, then the $i$-th row of $H_{24^*}$ is considered as having been transmitted and when $d_{i^*}$ is less than zero, it is the $(n+i)$-th row of $H_{24^*}$ which is considered transmitted.

According to this fourth variant, by choosing one of the rows of $H_{24^*}$ to represent a 4-tuple of binary information items, in fact either a row of $H$, or a row of $-H$, is chosen. In the case described here, an octet is therefore represented by two code words which modulate the two phase quadrature components of a signal modulated by quadrature amplitude modulation.

It can be demonstrated that the finite number $s$ of variables in a formally orthogonal matrix is restricted as shown in the following table, which gives the maximum value of $s$ as a function of $a$, $a$ being the largest power of 2 dividing $n$:

| a | 0 | 1 | 2 | 3 | 4 | 5 | 6 | 7 | |
|---|---|---|---|---|---|---|---|---|---|
| $s \leq$ | 1 | 2 | 4 | 8 | 9 | 10 | 12 | 16 | (8) |

for example:

- if $n$ is equal to 14, $a$ is equal to 1 and $s$ is less than or equal to 2, and
- if $n$ equal to 24, $a$ is equal to 3 and $s$ is less than or equal to 8.

The reader can refer to the article mentioned above to have a complete demonstration of this law.

Of course, the third and fourth variants can advantageously be combined to make it possible to represent 9 binary information items by 64-state quadrature amplitude modulation, each component successively representing homologous elements of two rows of the matrix $H_{24}^*$, the number of different pairs of rows being $24 \times 24 = 576 > 512 = 2^9$.

According to a variant, not depicted, the orthogonal matrices which relate to each of the phase quadrature modulated components are different.

## Claims

1. Information symbol coding device providing code words, the symbols of which are capable of amplitude modulating, in proportion to their value, a physical quantity on a transmission channel, the said physical quantity being capable of taking a finite number $s \geq 3$ of different non-zero values, characterised in that it has:

   - an input (103) for information symbols referred to as "to be transmitted",
   - processing means (104, 105, 106) adapted to associate, with information symbols to be transmitted, at least one row of an orthogonal matrix, the successive elements of this row specifying the successive symbols of a code word associated with the said information symbols to be transmitted, the said orthogonal matrix having elements taking their value from a finite set of $n$ different non-zero values, $n$ being $\geq 3$ and $\leq s$, and
   - a code word symbol output (107).

2. Coding device according to Claim 1, characterised in that the processing means (104, 105, 106) are adapted so that the said matrix corresponds to a formally orthogonal matrix, particular numerical values being assigned to its indeterminates.

3. Coding device according to either one of Claims 1 or 2, characterised in that the processing means (104, 105, 106) are adapted so that, for all rows of the said matrix, the sum of the squares of the elements of a row is constant.

4. Coding device according to any one of Claims 1 to 3, characterised in that the processing means (104, 105, 106) are adapted so that the said orthogonal matrix has elements taking their value from a set of eight different non-zero values.

5. Coding device according to Claim 4, characterised in that the processing means (104, 105, 106) are adapted so that the said orthogonal matrix has only elements belonging to the alphabet {-7, -5, -3, -1, 1, 3, 5, 7}.

6. Coding device according to any one of Claims 1 to 5, characterised in that the processing means (104, 105, 106) are adapted so that the said matrix :

- has twice as many rows as columns, and
- is composed of two orthogonal square sub-matrices, one of which is the opposite of the other.

7. Coding device according to any one of Claims 1 to 6, characterised in that the information items to be transmitted are $m$-ary, and in that the processing means (104, 105, 106) are adapted to associate, with a number $t$ of $m$-ary information items to be transmitted, one row of an orthogonal matrix which has at least $m^t$ rows.

8. Coding device according to any one of Claims 1 to 7, characterised in that the information items to be transmitted are $m$-ary, and in that the processing means (104, 105, 106) are adapted to associate, with a number $t^*$ of $m$-ary information items to be transmitted, two rows of an orthogonal matrix which has a number of rows greater than or equal to the square root of $m^{t^*}$.

9. Coding device according to any one of Claims 1 to 8, characterised in that it has a modulator (109) adapted to perform a quadrature amplitude modulation, the phase quadrature components of which represent code word symbols.

10. Coding device according to Claim 9, characterised in that the modulator (109) is adapted so that each of the phase quadrature components represents symbols of a code word.

11. Coding device according to Claim 9, characterised in that the modulator (109) is adapted so that the phase quadrature components jointly represent a pair of rows of an orthogonal matrix.

12. Coding system, characterised in that it has a coding device according to any one of Claims 1 to 11, and a means of sending (109, 110) a signal modulating the said physical quantity representing symbols of the code words generated by the said coding device.

13. Computer (10, 101, 108), characterised in that it has a coding device according to any one of Claims 1 to 12.

14. Device for capturing a physical quantity having a sensor adapted to provide information symbols to be transmitted, characterised in that it has a coding device according to any one of Claims 1 to 12.

15. Device for decoding information symbols transmitted in the form of code words modulating a physical quantity on a transmission channel, characterised in that it has:

- an input (203) for received word symbols,
- processing means (204, 205, 206) adapted to associate, with received word symbols, a row of an orthogonal matrix, the index of this row defining the successive transmitted information symbols associated with the said received word symbols, the said orthogonal matrix having elements taking at least their value from a finite set of $n$ different non-zero values, $n$ being $\geq 3$ and $\leq s$, and
- an output (207) for transmitted information symbols.

16. Decoding device according to Claim 15, characterised in that the processing means (204, 205, 206) are adapted so that the said matrix corresponds to a formally orthogonal matrix, particular numerical values being assigned to its indeterminates.

17. Decoding device according to either one of Claims 15 or 16, characterised in that, for all rows of the said matrix, the sum of the squares of the elements of a row is constant.

18. Decoding device according to any one of Claims 15 to 17, characterised in that the processing means (204, 205, 206) are adapted so that the said orthogonal matrix has elements taking their value from a set of eight non-zero values.

19. Decoding device according to Claim 18, characterised in that the processing means (204, 205, 206) are adapted so that the said orthogonal matrix has only elements belonging to the alphabet {-7, -5, -3, -1, 1, 3, 5, 7}.

**20.** Decoding device according to any one of Claims 15 to 19, characterised in that the processing means (204, 205, 206) are adapted:

- to sum, for each row of the said matrix, the products of the homologous symbols of the received word, on the one hand, and the elements of the said row, on the other hand, and
- to associate, with the said received word, the index of the row for which the value of the said sum is a maximum.

**21.** Decoding device according to any one of Claims 15 to 19, characterised in that the processing means (204, 205, 206) are adapted:

- to sum, for each row of the said matrix, the products of the homologous symbols of the received word, on the one hand, and the elements of the said row, on the other hand, and
- to associate with the said received word:

    . the index of the row for which the absolute value of the said sum is a maximum, when this sum is positive, and
    . the index of the row for which the absolute value of the said sum is a maximum, added to a predetermined value, when this sum is negative.

**22.** Decoding device according to any one of Claims 15 to 21, characterised in that the processing means (204, 205, 206) are adapted:

- to make use of an orthogonal matrix which has at least $m^t$ rows and
- to associate, with a received word, a number $t$ of transmitted $m$-ary information symbols.

**23.** Decoding device according to any one of Claims 15 to 21, characterised in that the processing means (204, 205, 206) are adapted:

- to make use of an orthogonal matrix which has a number of rows greater than or equal to the square root of $m^t$ rows and
- to associate, with two received words, $2.t$ $m$-ary symbols.

**24.** Decoding device according to any one of Claims 15 to 23, characterised in that it has a demodulator (210) adapted to perform a quadrature amplitude demodulation, the phase quadrature components of which represent symbols of a received word.

**25.** Information symbol coding method providing code words, the symbols of which are capable of amplitude modulating, in proportion to their value, a physical quantity on a transmission channel, the said physical quantity being capable of taking a finite number $s \geq 3$ of different non-zero values, characterised in that it includes:

- a step of inputting (301) information symbols referred to as "to be transmitted",
- a processing step (303, 305), during which, with information symbols to be transmitted, at least one row of an orthogonal matrix is associated, the successive elements of this row specifying the successive symbols of a code word associated with the said information symbols to be transmitted, the said orthogonal matrix having elements taking their value from a finite set of $n$ different non-zero values, $n$ being $\geq 3$ and $\leq s$, and
- a code word symbol outputting step (306).

**26.** Coding method according to Claim 25, characterised in that, during the said processing step (303, 305), use is made of a matrix which corresponds to a formally orthogonal matrix, particular numerical values being assigned to its indeterminates.

**27.** Coding method according to either one of Claims 25 or 26, characterised in that, during the processing step (303, 305), use is made of a matrix such that, for all its rows, the sum of the squares of the elements of a row is constant.

**28.** Coding method according to any one of Claims 25 to 27, characterised in that, during the processing step (303, 305), use is made of an orthogonal matrix which has elements taking their value from a set of eight different non-zero values.

29. Coding method according to Claim 28, characterised in that, during the processing step (303, 305), use is made of an orthogonal matrix having only elements belonging to the alphabet {-7, -5, -3, -1, 1, 3, 5, 7}.

30. Coding method according to any one of Claims 25 to 29, characterised in that, during the processing step (303, 305), use is made of a matrix which:

   - has twice as many rows as columns, and
   - is composed of two orthogonal square sub-matrices, one of which is the opposite of the other.

31. Coding method according to any one of Claims 25 to 30, characterised in that the information items to be transmitted are $m$-ary, and in that, during the processing step (303, 305), one row of an orthogonal matrix which has at least $m^t$ rows is associated with a number $t$ of $m$-ary information items to be transmitted.

32. Coding method according to any one of Claims 25 to 31, characterised in that the information items to be transmitted are m-ary, and in that, during the processing step (303, 305), two rows of an orthogonal matrix which has a number of rows greater than or equal to the square root of $m^{t^*}$ are associated with a number $t^*$ of m-ary information items to be transmitted.

33. Coding method according to any one of Claims 25 to 32, characterised in that it includes a modulation step (307) during which a quadrature amplitude modulation is performed, the phase quadrature components of which represent code word symbols.

34. Coding method according to Claim 33, characterised in that, during the modulation step (307), each of the phase quadrature components represents symbols of a code word.

35. Coding method according to Claim 33, characterised in that, during the modulation step (307), the phase quadrature components jointly represent a pair of rows of an orthogonal matrix.

36. Method of decoding information symbols transmitted in the form of code words modulating a physical quantity on a transmission channel, characterised in that it includes:

   - a step of inputting (401) received word symbols,
   - a processing step (402 to 408), during which a row of an orthogonal matrix is associated with received word symbols, the index of this row defining the successive transmitted information symbols associated with the said received word symbols, the said orthogonal matrix having elements taking at least their value from a finite set of $n$ different non-zero values, $n$ being $\geq 3$ and $\leq s$, and
   - a step of outputting (410) transmitted information symbols.

37. Decoding method according to Claim 36, characterised in that, during the processing step (402 to 408), use is made of a matrix which corresponds to a formally orthogonal matrix, particular numerical values being assigned to its indeterminates.

38. Decoding method according to either one of Claims 36 or 37, characterised in that, during the processing step (402 to 408), use is made of a matrix for which, for all rows, the sum of the squares of the elements of a row is constant.

39. Decoding method according to any one of Claims 36 to 38, characterised in that, during the processing step (402 to 408), use is made of an orthogonal matrix which has elements taking their value from a set of eight non-zero values.

40. Decoding method according to Claim 39, characterised in that, during the processing step (402 to 408), use is made of an orthogonal matrix which has only elements belonging to the alphabet {-7, -5, -3, -1, 1, 3, 5, 7}.

41. Decoding method according to any one of Claims 36 to 40, characterised in that, during the processing step (402 to 408) :

   - for each row of the said matrix, the products of the homologous symbols of the received word, on the one hand, and the elements of the said row, on the other hand, are summed (403), and

- the index of the row for which the value of the said sum is a maximum is associated (404, 408) with the said received word.

42. Decoding method according to any one of Claims 36 to 40, characterised in that, during the processing step (402 to 408) :

- for each row of the said matrix, the products of the homologous symbols of the received word, on the one hand, and the elements of the said row, on the other hand, are summed, and
- the following are associated with the said received word:

  . the index of the row for which the absolute value of the said sum is a maximum, when this sum is positive, and
  . the index of the row for which the absolute value of the said sum is a maximum, added to a predetermined value, when this sum is negative.

43. Decoding method according to any one of Claims 36 to 42, characterised in that, during the processing step (402 to 408) :

- use is made of an orthogonal matrix which has at least $m^t$ rows and
- a number $t$ of transmitted $m$-ary information symbols are associated with a received word.

44. Decoding method according to any one of Claims 36 to 42, characterised in that, during the processing step (402 to 408) :

- use is made of an orthogonal matrix which has a number of rows greater than or equal to the square root of $m^t$ rows and
- $2.t$ m-ary symbols are associated with two received words.

45. Decoding method according to any one of Claims 36 to 44, characterised in that it includes a demodulation step during which a quadrature amplitude demodulation is performed, the phase quadrature components of which represent symbols of a received word.

KEYBOARD 101

CU 106

ROM 105

program1

matrix

table1

INPUT PORT 103

RAM

binary_data

last_code_word

no_of_bits

104

111

MODULATOR 109

OUTPUT PORT 107

102

10

TRANSMITTER 110

SCREEN 108

Fig. 1

Start

*Last_code_word =*
*binary_data =*
*no_of_bits = 0* —— 300

Reception and storage
of one binary data item
*no_of_bits = no_of_bits +1* —— 301

no ←—— *no_of_bits = 3 ?* —— 302

yes

303 —— Matching by means
of *table1.*
*no_of_bits = 0*

305 —— Write
*last_code_word*

Reception and storage
of one binary data item
*no_of_bits = no_of_bits +1* —— 311

no ←—— *no_of_bits = 3 ?* —— 312

Modulate the
64-QAM signal

307

yes

Matching by means
of *table1* —— 313

306 —— Write to
output port

Fig. 2

Fig. 3

Fig. 4A

From 407 (fig. 4A)

Store
*binary_data*

408

*code_words* empty ?

409

yes

no

Transfer
*binary_data*

410

To 400 (fig. 4A)

Remove first code word
from *code_words* ;
$i = imax = 0$ ;
*val_max* = - *infinity*

411

To 402 (fig. 4A)

Fig. 4B

**European Patent Office**

**EUROPEAN SEARCH REPORT**

Application Number

EP 98 40 2669

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | HIDEICHI SASAOKA ET AL: "TIME SPREAD MODULATION SYSTEM FOR DIGITAL LAND MOBILE RADIO COMMUNICATION" ELECTRONICS & COMMUNICATIONS IN JAPAN, PART I - COMMUNICATIONS, vol. 76, no. 5, 1 May 1993, pages 54-65, XP000425182 * page 55, right-hand column, last paragraph - page 56, left-hand column, paragraph S * * page 56, right-hand column, paragraph 2 - page 57, left-hand column, paragraph 4 * * page 60, right-hand column, last paragraph - page 61, left-hand column, paragraph 1; figures 1,2; tables 1-3 * | 1,15,25, 36 | H04J11/00 H04L23/02 |
| A | DAS J: "A technique for improving the efficiency of M-ary signaling" IEEE TRANSACTIONS ON COMMUNICATIONS, FEB. 1984, USA, vol. COM-32, no. 2, pages 199-201, XP002072640 ISSN 0090-6778 * page 199, right-hand column, paragraph 3; figure 1 * | 1,15,25, 36 | |
| | | | **TECHNICAL FIELDS SEARCHED (Int.Cl.6)** H04J H04L G06F |
| A | US 5 204 874 A (FALCONER DAVID D ET AL) 20 April 1993 * column 4, line 51 - column 5, line 24 * * column 6, line 24 - line 46 * * column 14, line 22 - line 40 * | 1,15,25, 36 | |

-/--

The present search report has been drawn up for all claims

| Place of search | Date of completion of the search | Examiner |
|---|---|---|
| THE HAGUE | 23 February 1999 | Pieper, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

European Patent Office

Application Number

EP 98 40 2669

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | HARMUTH H F ET AL: "SEQUENCY MULTIPLEXING OF DIGITAL SIGNALS" APPL OF WALSH FUNCT, SYMP, 4TH, PROC;WASHINGTON, DC, USA APR 16-18 1973, 1973, pages 202-209, XP002072609 1973 * page 205, left-hand column, paragraph 3 - page 206, right-hand column, paragraph 3 * | 1,15,25, 36 | |

TECHNICAL FIELDS SEARCHED (Int.Cl.6)

The present search report has been drawn up for all claims

| Place of search | Date of completion of the search | Examiner |
|---|---|---|
| THE HAGUE | 23 February 1999 | Pieper, T |

EP 0 915 582 A1

**ANNEX TO THE EUROPEAN SEARCH REPORT
ON EUROPEAN PATENT APPLICATION NO.**

EP 98 40 2669

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-1999

| Patent document cited in search report | Publication date | Patent family member(s) | | Publication date |
|---|---|---|---|---|
| US 5204874 A | 20-04-1993 | US | 5159608 A | 27-10-1992 |
| | | CA | 2088111 A,C | 20-08-1993 |
| | | IL | 104640 A | 12-09-1996 |
| | | JP | 6097913 A | 08-04-1994 |
| | | JP | 8031840 B | 27-03-1996 |
| | | KR | 9608960 B | 10-07-1996 |
| | | CA | 2074595 A,C | 01-03-1993 |
| | | IL | 102766 A | 19-01-1996 |
| | | JP | 5219015 A | 27-08-1993 |
| | | JP | 8031839 B | 27-03-1996 |
| | | KR | 9608988 B | 10-07-1996 |

EPO FORM P0459

For more details about this annex : see Official Journal of the European Patent Office, No. 12/82

25